# NEUE EUROPÄISCHE PATENTSCHRIFT

(11) **EP 0 841 201 B2**
(45) Veröffentlichungstag und Bekanntmachung des Hinweises auf die Entscheidung über den Einspruch: **22.09.2010**
(45) Hinweis auf die Patenterteilung: 21.09.2005
(21) Anmeldenummer: 97110237.1
(22) Anmeldetag: 23.06.1997
(51) Int. Cl.: B60H 1/00

(54) **Heiz- oder Klimaanlage für ein Kraftfahrzeug**
Heating or air conditioning installation for motor vehicles.
Installation de chauffage ou de climatisation pour véhicule à moteur.

(30) Priorität: 08.11.1996 DE 19646123
(43) Veröffentlichungstag der Anmeldung: 13.05.1998
(73) Patentinhaber: Behr GmbH & Co. KG, 70469 Stuttgart (DE)
(72) Erfinder: Beck, Oliver, 71067 Sindelfingen-Hinterweil (DE); Bendell, Ian, 71297 Mönsheim (DE); Halder, Prasanta, 71254 Ditzingen-Heimerdingen (DE); Kampf, Hans, 71404 Korb (DE); Lochmahr, Karl, 71665 Vaihingen (DE); Molt, Kurt, Dr.-Ing., 74321 Bietigheim-Bissingen (DE); Zeeb, Joachim, 70771 Echterdingen (DE)
(74) Vertreter: Wallinger, Michael

(56) Entgegenhaltungen:
- EP-A- 0 272 789
- EP-A- 0 678 721
- EP-B- 0 170 177
- DE-A- 3 610 188
- DE-A- 3 940 361
- FR-A- 2 437 312
- FR-A- 2 629 022
- JP-A- 5 -58 144
- US-A- 3 174 538
- US-A- 4 460 036
- US-A- 4 482 009
- US-A- 4 537 245
- US-A- 4 559 994
- US-A- 4 582 252
- US-A- 4 673 032
- US-A- 5 016 704
- US-A- 5 186 237
- US-A- 5 267 896
- US-A- 5 553 664

## Beschreibung

Die Erfindung betrifft eine Heizungs- oder Klimaanlage für ein Kraftfahrzeug nach dem Oberbegriff des Patentanspruchs 1.

Aus der US 4,482,009 ist eine Heiz- oder Klimaanlage mit einem Gebläse und einer Heizkörpereinheit bekannt, wobei stromabwärts der Heizkörpereinheit der Luftverteilungsraum geteilt ausgebildet ist. Von dem ersten Luftverteilungsraum führen zwei Luftkanäle zu Klimatisierungszonen des Vorderraums, nämlich zum Fahrer- und Beifahrersitz. Von einem zweiten Luftverteilungsraum führen zwei Kanäle zu Klimatisierungszonen des Rückraums, nämlich zu einem Rücksitz hinter dem Fahrer und einem Rücksitz hinter dem Beifahrer. An den Verzweigungsstellen der Luftkanäle sind jeweils Luftsteuerelemente angeordnet zur Steuerung der zu den jeweiligen Klimatisierungszonen zuzuführenden Luftmenge. Nachteilig an der bekannten Anlage ist, daß lediglich die Temperaturen von zwei Klimatisierungszonen, nämlich einerseits die Temperatur der Klimatisierungszonen für den Vorderraum und andererseits der Temperatur für die Klimatisierungszonen des Rückraums, unabhängig voneinander einstellbar sind. Zwar sind im weiteren Verlauf der Luftführung Luftsteuerelemente vorgesehen, die die Mischung eines zu einer vorderen Klimatisierungszone führenden Luftstroms mit einem zu einer hinteren Klimatisierungszone führenden Luftstromes erlaubt. Die dadurch bewirkte Temperatureinstellung ist jedoch weiterhin abhängig von der Stellung der Luftsteuerlemente, die die Luftmenge zu anderen Klimatisierungszonen steuern.

Weiterhin ist aus der DE 39 40 361 A1 eine Heiz- oder Klimaanlage für Kraftfahrzeuge zu den Klimatisierungszonen des Rückraums bekannt, wobei ein erster Luftkanal zur Führung von Kaltluft und ein zweiter Luftkanal zur Führung von Warmluft dient. Die beiden Luftkanäle münden in einem Mischraum, in dem eine gewünschte Temperatur des zur Belüftung des Rückraums dienenden Luftstroms einstellbar ist. Der Luftkanal zur Führung des Luftstroms in den Fußbereich des Rückraums zweigt stromaufwärts des Mündungsbreichs von dem Warmluftkanal ab, so daß dessen Temperatur abhängig ist von den Temperaturverhältnissen in dem Vorderraum. Nachteilig an dieser bekannten Anlage ist, daß mit der Steuerung der Luftmenge für den Rückraum in einem rückraumnahen Bereich ein erheblicher Platzbedarf verbunden ist.

Die US-A-5 267 896 beschreibt eine Heizungs- oder Klimaanlage, die eine Links-Rechts-Regelung vorsieht, bei welcher die Temperatur für die Vorderraum- und Rückraumzone sowohl rechts als auch links einheitlich geregelt wird. Die Temperaturregelung wird rechts wie links von einem einzigen Steuerelement durchgeführt, von welchem die Luftkanäle wegführen.

Aufgabe der Erfindung ist es daher, eine Heiz- oder Klimaanlage zur Temperierung des Vorder- und Rückraums eines Fahrzeugs anzugeben, die für den Nutzer den Komfort bei der Temperatureinstellung verbessert und die platzsparend aufgebaut ist.

Zur Lösung der Aufgabe weist die Erfindung die Merkmale des Patentanspruchs 1 auf.

Ein besonderer Vorteil der Erfindung besteht darin, daß auf einfache Weise die Temperatur für mindestens vier Klimatisierungszonen des Kraftfahrzeugs unabhängig voneinander einstellbar ist. Unmittelbar im Bereich des Heizkörpers wird die Temperatur des jeweils zu einer Klimatisierungszone führenden Luftstroms eingestellt, wobei eine Wechselwirkung bzw. ein Austausch von Luftströmen unterschiedlicher Klimatisierungszonen vermieden wird. Somit kann eine getrennte und unbeeinflußbare Temperatureinstellung zwischen Vorder- und Rückraum erfolgen. Ein weiterer Vorteil ergibt sich dadurch, daß die Temperatureinstellung der Luftströme unmittelbar im Bereich der Heizkörpereinheit vorgenommen wird. Die Mittel zur Einstellung der Temperatur erfordern keinen höheren Platzbedarf als eine herkömmliche Klimaanlage für lediglich zwei Klimatisierungszonen.

Nach einer Ausgestaltung der Erfindung ist die Heizkörpereinheit in vier Heizkörperzonen aufgeteilt, so daß vier Teilluftströme durch die Heizkörpereinheit hindurch geleitet werden. Diese Teilluftströme werden nach Verlassen der Heizkörpereinheit jeweils Luftkanälen zugeführt, ohne daß eine Vermischung mit anderen Teilluftströmen erfolgen kann.

Nach einer Weiterbildung der Erfindung besteht die Heizkörpereinheit aus einem einzigen Heizkörper, der zur Bildung der vier Heizkörperzonen eine vertikale und eine horizontale Trennung aufweist. Die vertikale Trennung erfolgt dadurch, daß der Anschluß für den Vorlauf mittig des Heizkörpers angeordnet ist, so daß das Kühlmittel jeweils in Richtung zu den außenliegenden und parallelen gegenüberliegenden Wasserkästen in etwa einer Ebene strömt. Der Heizkörper ist im wesentlichen symmetrisch aufgebaut, wobei er einen gleichartigen linken und rechten Teil aufweist. Der linke und rechte Teil des Heizkörpers weisen jeweils eine horizontale Trennwand auf, die diesen in ein oberes Segment und ein unteres Segment aufteilt.

Nach einer Weiterbildung der Erfindung sind die dem unteren Segment zugeordneten Rohre des Heizkörpers mit Turbulenzeinlagen versehen. Hierdurch wird ein besserer Wärmeübergang in den unteren Segmenten erzeugt, so daß für den Luftstrom des den unteren und somit dem Rückraum zugeordneten Teil des Heizkörpers eine vergleichsweise höhere Temperatur erzielbar ist.

Weitere Vorteile der Erfindung ergeben sich aus den weiteren Unteransprüchen.

Zwei Ausführungsbeispiele der Erfindung werden nachfolgend anhand der Zeichnungen näher erläutert.

Es zeigen:
- **Fig. 1**: Eine schematische Darstellung einer Klimaanlage nach einem ersten Ausführungsbeispiel,
- **Fig. 2**: eine schematische Darstellung einer Klimaanlage nach einem Ausführungsbeispiel welches nicht unter den Gegenstand des Anspruchs 1 fällt.
- **Fig. 3**: eine Vorderansicht einer Heizkörpereinheit.

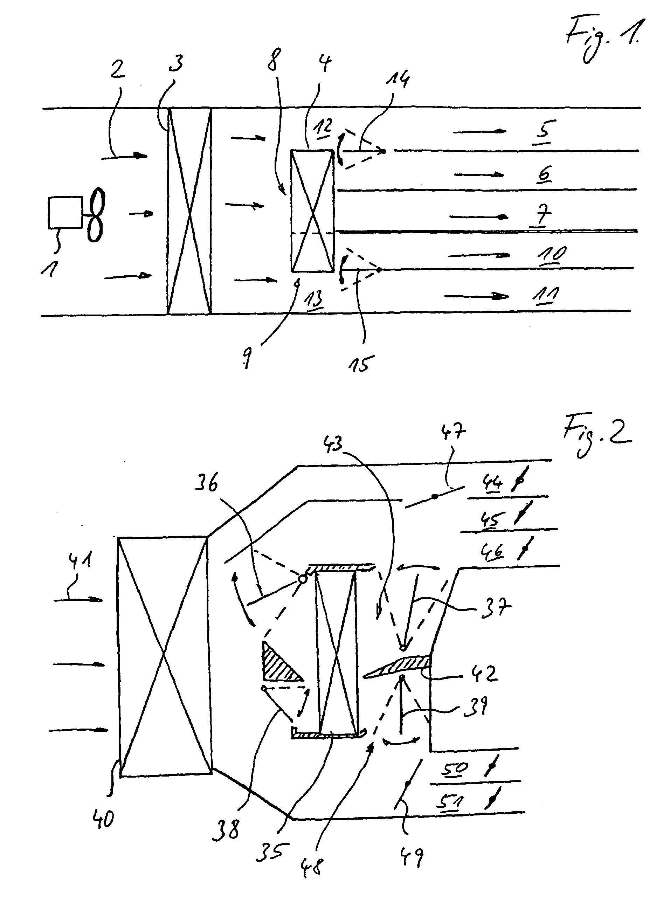

In **Fig. 1** ist eine Klimaanlage für den Einbau in Kraftfahrzeuge schematisiert dargestellt. Die Klimaanlage ist bezüglich einer vertikalen Längsmittelebene symmetrisch ausgebildet, so daß die Temperatur auf der Beifahrerseite getrennt von der Fahrerseite eingestellt werden kann. Die in Fig. 1 dargestellte Luftführung kann demnach sowohl für die Fahrer- als auch Beifahrerseite gelten.

Die in Fig. 1 dargestellte Klimaanlage weist eingangsseitig ein Gebläse 1 auf, das einen Luftstrom 2 ansaugt. Der Luftstrom 2 kann in Abhängigkeit von einer nicht dargestellten Umluft/Frischluft-Klappe entweder ein Frischluftstrom oder ein Umluftstrom sein. Der zugeführte Luftstrom 2 beaufschlagt einen Verdampfer 3, der von einem Kältemittel durchflossen wird und den Luftstrom auf eine vorgegebene Temperatur abkühlt. Stromabwärts des Verdampfers 3 ist eine Heizkörpereinheit angeordnet, die aus einem einstückigen Heizkörper 4 besteht. Alternativ dazu kann die Heizkörpereinheit auch aus mehreren Heizkörper-Segmenten bestehen, die modulartig zusammensetzbar sind. Stromabwärts des Heizkörpers 4 führen eine Mehrzahl von Luftkanälen zu den entsprechenden Austrittsdüsen im Kraftfahrzeug. Zur Führung des Luftstroms an einer Vorderraumseite sind ein Belüftungskanal 5, ein Defrostkanal 6 und ein Fußraumkanal 7 vorgesehen. Der Belüftungskanal 5 ist gehäusewandseitig angeordnet. Die Kanäle 5, 6 und 7 sind einem oberen Segment 8 des Heizkörpers zugeordnet und führen den Luftstrom zu Klimatisierungszonen des Vorderraums. Einem unteren Segment 9 des Heizkörpers 4 sind Luftkanäle zugeordnet, die temperierte Luft den Klimatisierungszonen eines Rückraums zuführen. Zur Führung des Luftstroms zu einem Fußbereich des Rückraums ist ein Fußraumkanal 10 vorgesehen, der benachbart ist zum Fußraumkanal 7 für den Vorderraum. Gehäusewandseitig anschließend ist ein Belüftungskanal 11 ausgebildet, der einen Luftstrom in einen höheren Bereich des Rückraums führt. Die vorgenannten Luftkanäle sind derart angeordnet, daß auf einfache Weise eine Temperaturschichtung erfolgen kann. Die Belüftungskanäle 5 und 11 sind gehäusewandseitig in Verlängerung eines Bypasses 12 bzw. 13 angeordnet, wobei jeweils eine Mischklappe 14 für den oberen Bereich und eine Mischklappe 15 für den unteren Bereich vorgesehen sind zur Einstellung der Luftmenge bzw. der Lufttemperatur. Die Mischklappen 14 und 15 sind unmittelbar im Anschluß an den Heizkörper 4 angeordnet und bilden einen Luftverteilraum, wobei mittels der Mischklappe 14 die Temperatur in dem Belüftungskanal 5 und dem Defrostkanal 6 beeinflußbar ist sowie mittels der Mischklappe 15 die Temperatur in dem Fußraumkanal 10 und dem Belüftungskanal 11 für den Rückraum einstellbar ist. Der Fußraumkanal 7 ist mittig angeordnet und erhält einen unmittelbar im Heizkörper 4 temperierten Luftstrom. Zur Einstellung der Temperatur ist der Heizkörper 4 wasserseitig geregelt, d.h. der Heizkörper 4 ist über Anschlußstutzen mit nicht gezeigten Ventilen verbunden, deren Öffnungsstellung abhängig ist von der einzustellenden Temperatur. Wie aus Fig. 1 zu ersehen ist, kann durch Betätigen der Mischklappe 15 die Temperatur im Fußraumkanal 10 und in dem Belüftungskanal 11 unabhängig von der Temperatur in den zu den vorderen Klimatisierungszonen führenden Kanälen 5, 6 und 7 eingestellt werden.

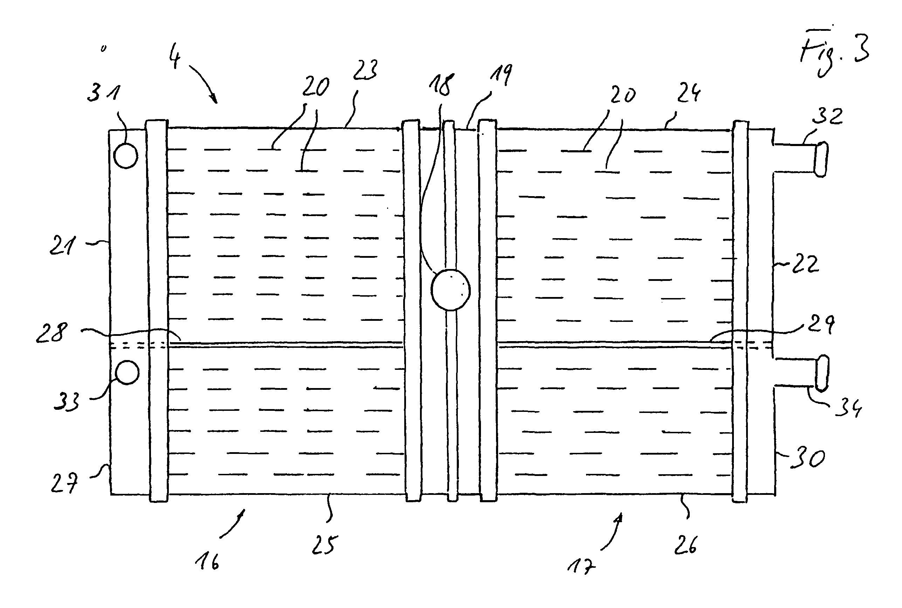

Nach einer bevorzugten Ausführungsform der Erfindung ist der Heizkörper 4 segmentartig ausgebildet. Wie aus **Fig. 3** zu ersehen ist, besteht der Heizkörper 4 aus einem linken und rechten Teil 16, bzw. 17. Die Zuführung des Kühlmittels erfolgt über eine zwischen diesen beiden Teilen 16 und 17 angeordnete mittlere Eintrittsöffnung 18, die das Kühlmittel in einen mittleren Wasserkasten 19 führt, von dem aus es durch waagerechte Rohre 20 zu dem seitlich versetzten linken Wasserkasten 21 und rechten Wasserkasten 22 geleitet wird. Sowohl der linke Teil 16 als auch der rechte Teil 17 des Heizkörpers 4 ist in ein oberes Segment 23 bzw. 24 als auch in eine unteres Segment 25 bzw. 26 aufgeteilt. Eine sich vom mittleren Wasserkasten 19 bis zu einer Seitenwand 27 erstreckende Trennwand 28 trennt das obere Segment 23 von dem unteren Segment 25. Korrespondierend dazu verläuft im rechten Teil 17 des Heizkörpers 4 eine Trennwand 29 bis unmittelbar zu einer gegenüberliegenden Seitenwand 30 des Heizkörpers 4. Den Segmenten 23, 24, 25, 26 sind jeweils Austrittsöffnungen 31, 32, 33 und 34 zugeordnet, durch die das Kühlmittel wieder aus dem Heizkörper 4 ausströmen kann. Nach einer besonderen Ausgestaltung der Erfindung werden die oberen Segmente 23 und 24 wasserseitig geregelt, während die unteren Segmente 25 und 26 luftseitig geregelt werden. Hierdurch läßt sich eine weitgehend unabhängige Temperatureinstellung zwischen Voderraum einerseits und Rückraum andererseits ermöglichen.

Vorteilhaft können die Rohre der unteren Segmente 25, 26 derart ausgebildet sein, daß der Heizkörper 4 für den Fußraum eine höhere Temperatur zur Verfügung stellt als für den Vorderraum. Zu diesem Zweck könnten beispielsweise Turbulenzeinlagen in die wärmeführenden Rohre der unteren Segmente 25, 26 eingesetzt sein, die eine Verwirbelung des Kühlmittels verursachen und damit einen besseren Wärmeübergang schaffen.

Nach einem weiteren Ausführungsbeispiel der Erfindung gemäß **Fig. 2** wird der Heizkörper 35 ausschließlich luftseitig geregelt. Zu diesem Zweck sind stromaufwärts des Heizkörpers 35 eine obere Mischluftklappe 36 und eine stromabwärts angeordnete zweite Mischluftklappe 37 zur Luftmengeneinstellung des Vorderraums vorgesehen. In dem unterern Bereich des Heizkörpers 35 sind zur Einstellung der Luftmenge für den Rückraum eine untere Mischluftklappe 38 stromaufwärts und eine zweite Mischluftklappe 39 stromabwärts des Heizkörpers 35 angeordnet. Durch die Stellung dieser Mischluftklappen 36, 37, 38, 39 kann die Temperatur des von einem Verdampfer 40 beaufschlagten Luftstroms 41 getrennt zwischen Vorder- und Rückraum eingestellt werden. Oberhalb einer Trennwand 42 wird ein oberer Luftverteilraum 43 gebildet, von dem aus die temperierte Luft durch einen Belüftungskanal 43, einen Defrostkanal 44 und einen Fußraumkanal 45 in den Vorderraum geleitet wird. Der Belüftungskanal 43 erstreckt sich im wesentlichen direkt stromabwärts des Verdampfers 40 unter Umgehung des Heizkörpers 35, wobei eine Schwenkklappe 37 im Bereich des Luftverteilraums 43 vorgesehen ist, mittels derer erwärmte Luft beigemischt werden kann. Unterhalb der Trennwand 42 ist ein unterer Luftverteilraum 48 ausgebildet, in dem die Temperatur des für den Rückraum vorgesehenen Luftstroms eingestellt wird. Zusätzlich ist eine Schwenkklappe 49 in einem Bereich zwischen einem beginnenden Fußraumkanal 50 und einem Belüftungskanal 51 angeordnet, so daß beiden Kanälen 50, 51 ein unterschiedlicher Anteil von durch den Verdampfer 40 abgekühlter Luft beigemischt werden kann. Auch diese Ausführungsform der Erfindung ermöglicht eine unabhängige Temperatureinstellung der zu den verschiedenen Klimatisierungszonen führenden Luftströme. Insbesondere durch die Segmentierung des Heizkörpers gemäß dem Ausführungsbeispiel nach Fig. 1 läßt sich eine platzsparende Klimaanlage verwirklichen, die den steigenden Komfortbedürfnissen gerecht wird. Alternativ dazu kann aber auch der gleiche Komfort gewährleistet werden, wenn gemäß Ausführungsbeispiel nach Fig. 2 ein herkömmlicher Heizkörper verwendet wird. Durch Anordnung der Luftkanäle und der Mischklappen im Bereich des Heizkörpers werden die gleichen Wirkungen erzielt.

Alternativ kann der Heizkörper 4 auch mit aufrechten, vertikalen Rohren ausgebildet sein. Hierdurch wird eine automatische Temperaturschichtung erzielt, wobei die Temperatur des Kühlmittels gleichmäßig von einem Bereich in Höhe der Eintrittsöffnung 18 in Richtung der in der Höhe der endseitigen Rohre am oberen und unteren Ende des Heizkörpers 4 angeordneten Austrittsöffnungen abnimmt. Durch diese Maßnahme wird insbesondere dem Fußraumkanal 7 des Vorderraums eine höhere Temperatur als dem Belüftungskanal 5 desselben zugeordnet. In gleicher Weise wird der benachbarte und eintrittsöffnungsnahe Fußraumkanal 10 des Rückraums mit einem Luftstrom höherer Temperatur als der Belüftungskanal 11 des Rückraums beaufschlagt.

## Patentansprüche

1. Heiz- oder Klimaanlage für ein Kraftfahrzeug mit einem Vorderraum und einem Rückraum mit einem Gehäuse, die umfaßt:
- ein Gebläse (1) zum Ansaugen von Frisch- und/oder Umluft,
- eine Heizkörpereinheit (4) zum Erwärmen mindestens eines Teils das Luftstroms,
- einen Im Abschluß der Heizkörpareinheit (4) geteilten Luflverteilungsraum, von dem aus Luftkanäle (5,6,7,10,11) in mehrere Klimatiaierungszonen des Kraftfahrzeugs führen, wobei Luftkanäle (5,6,7,10,11) zumindest in zwei Klimatisierungszonen des Rückraums des Kraftfahrzeugs und in zumindest zwei Klimatisierungszonen des Vorderraums des Kraftfahrzeugs führen und
- Luflsteuerungselemente (14,15) zur Steuerung der den Klimatisierungszonen zugeführten Luftmenge,
Mittel (14,15,28,29) zur getrennten und unabhängigen Einstellung der Lufttemperatur in den zu mindestens vier verschiedenen Klimatisierungszonen führenden Luftkanälen (5,6,7,10,11), so dass die Temperatur in den einzelnen Klimatisierungszonen des Rückraums und des Vorderraums unabhängig voneinander einstellbar ist,
**dadurch gekennzeichnet, daß** die Heizkörpereinheit (4) eine horizontale Trennwand (28, 29) aufweist, wobei ein oberes Segment (23, 24) dem Vorderraum und ein unteres Segment (25, 26) dem Rückraum zugeordnet ist,
und die Heizkörpereinheit als einstückiger Heizkörper (4, 35) ausgebildet ist, der eine rechts/links- Trennung aufweist und Insgesamt vlervonelnan der trennbare Segmente (23, 24, 25, 28) aufweist.

2. Anlage nach Anspruch 1, **dadurch gekennzeichnet daß** Luftsteuerelemente (14, 15) und/oder Trennwände des Gehäuses stromaufwärts und/oder stromabwärts der Heizkörpereinheit (Heizkörper 4) derart angeordnet sind, daß mindestens vier Teilluftströme zu wenigstens vier Klimatisierungsonen geleitet werden.

3. Anlage nach Anspruch 1 oder 2, **dadurch gekennzeichnet, daß** unmittelbar im Bereich der Heizkörpereinheit (4) Luftsteuerelemente (14, 15) zur Steuerung und/oder Vertellung der Luft zu den Luftkanälen (5, 6, 7; 10, 11) angeordnet sind,

4. Anlage nach einem oder mehreren der Ansprüche 1 bis 3, **dadurch gekennzeichnet, daß** sich die zu den Klimatisierungszonen führenden Luftkanäle (5, 6, 7; 10, 11) unmittelbar an die Heizkörpereinheit (4) anschließen.

5. Anlage nach Anspruch 1, **dadurch gekennzeichnet, daß** die Heizkörpereinheit (4) derart ausgebildet ist, daß das dem Rückraum zugeordnete Segment (25, 26) von einem Kühlmittel unter Abgabe einer größeren Wärmeleistung als das dem Vorderraum zugeordneten Segment (23, 24) durchströmt wird.

## Claims

1. A heating or air-conditioning system for a motor vehicle having a front compartment and a rear compartment with a housing which comprises:
- a fan (1) for aspirating fresh and/or recirculated air,
- a radiator unit (4) for heating at least part of the air flow,
- a split air distribution chamber connected to the radiator unit (4) from which air ducts (5, 6, 7, 10, 11) lead to several air-conditioning zones in the motor vehicle, air ducts (5, 6, 7, 10, 11) leading to at least two air-conditioning zones in the rear compartment of the motor vehicle and to at least two air-conditioning zones in the front compartment of the motor vehicle and
- air control elements (14, 15) for controlling the amount of air delivered to the air-conditioning zones,
- means (14, 15, 28, 29) for the separate and independent setting of the air temperature in the air ducts (5, 6, 7, 10, 11) leading to at least four different air-conditioning zones in such a manner that the temperature in the individual air-conditioning zones of the rear compartment and the front compartment can be set independently of one another,
the radiator unit (4) has a horizontal dividing wall (28, 29), an upper segment (23, 24) being associated with the front compartment and a lower segment (25, 26) being associated with the rear compartment
and the radiator unit is designed as a single-part radiator (4, 35) which has a right/left division and a total of four separable segments (23, 24, 25, 26).

2. A system in accordance with claim 1,
**characterised in that**
air control elements (14, 15) and or dividing walls of the housing are positioned upstream and/or downstream of the radiator unit (radiator 4) such that at least part air flows are fed to at least four air-conditioning zones.

3. A system in accordance with claim 1 or 2,
**characterised in that**
positioned in the immediate vicinity of the radiator unit (4) are air control elements (14, 15) for controlling and/or distributing the air to the air ducts (5, 6, 7, 10, 11).

4. A system in accordance with one or more of claims 1 to 3,
**characterised in that**
the air ducts (5, 6, 7, 10, 11) leading to the air-conditioning zones are connected directly to the radiator unit (4).

5. A system in accordance with claim 1,
**characterised in that**
the radiator unit (4) is designed such that the coolant flowing through the segment (25, 26) associated with the rear compartment produces a greater thermal output than that flowing through the segment (23,24) associated with the front compartment.

## Revendications

1. Installation de chauffage ou de climatisation pour un véhicule à moteur comprenant un espace avant et un espace arrière avec un boîtier, qui comprend
- une soufflerie (1) pour l'aspiration d'air frais et/ou d'air de circulation,
- une unité d'élément de chauffage (4) pour le réchauffement d'au moins une partie du flux d'air,
- - un espace de répartition d'air divisé à la suite de l'unité d'élément de chauffage (4), duquel des conduits d'air (5, 6, 7, 10, 11) partent dans plusieurs zones de climatisation du véhicule, des conduits d'air (5, 6, 7, 10, 11) partant au moins dans deux zones de climatisation de l'espace arrière du véhicule et dans au moins deux zones de climatisation de l'espace avant du véhicule et
- des éléments de contrôle d'air (14, 15) pour le contrôle de la quantité d'air amenée aux zones de climatisation,
- des moyens (14, 15, 28, 29) pour le réglage séparé et indépendant de la température de l'air dans les conduits d'air (5, 6, 7, 10, 11) aboutissant à au moins quatre zones de climatisation différentes, de sorte que la température dans les différentes zones de climatisation de l'espace arrière et de l'espace avant peut être réglée de façon indépendante les unes des autres,
l'unité d'élément de chauffage (4) présente une cloison de séparation (28, 29) horizontale, un segment (23, 24) supérieur étant attribué à l'espace avant et un segment (25, 26) inférieur à l'espace arrière,
et l'unité d'élément de chauffage est conçue comme un élément de chauffage (4, 35) d'une seule pièce, qui présente une séparation à droite/à gauche et présente au total quatre segments (23, 24, 25, 26) pouvant être séparés les uns des autres.

2. Installation selon la revendication 1, **caractérisée en ce que** des éléments de contrôle d'air (14, 15) et/ou des cloisons de séparation du boîtier sont disposés en amont et/ou en aval de l'unité d'élément de chauffage (élément de chauffage 4) de sorte qu'au moins quatre flux d'air partiel sont acheminés à au moins quatre zones de climatisation.

3. Installation selon la revendication 1 ou 2, **caractérisée en ce que** des éléments de contrôle d'air (14, 15) pour le contrôle et/ou la répartition de l'air vers les conduits d'air (5, 6, 7; 10, 11) sont disposés directement dans la zone de l'unité d'élément de chauffage (4).

4. Installation selon l'une quelconque ou plusieurs des revendications 1 à 3, **caractérisée en ce que** les conduits d'air (5, 6, 7; 10, 11) aboutissant aux zones de climatisation sont raccordés directement à l'unité d'élément de chauffage (4).

5. Installation selon la revendication 1, **caractérisée en ce que** l'unité d'élément de chauffage (4) est conçue de telle sorte que le segment (25, 26) attribué à l'espace arrière est traversé par un agent réfrigérant avec le dégagement d'une puissance thermique plus grande que le segment(23, 24) attribué à l'espace avant.
